# EUROPEAN PATENT APPLICATION

(11) **EP 3 561 035 A1**
(43) Date of publication of application: **30.10.2019**
(21) Application number: 19167780.6
(22) Date of filing: 08.04.2019
(51) Int. Cl.: C11D 3/20, B65D 65/46, C11D 3/37, C11D 3/43, C11D 17/04, C08L 29/04

(54) **WATER-SOLUBLE FILMS, DETERGENT SINGLE DOSE PACKS EMPLOYING WATER-SOLUBLE FILMS, AND METHODS OF PRODUCING THE SAME**

(30) Priority: 25.04.2018 US 201815962336
(71) Applicant: Henkel IP & Holding GmbH, 40589 Düsseldorf (DE)
(72) Inventor: Piorkowski, Daniel T, Fairfield, 06824 (US); Camire, Casey, Wallingford, 06492 (US)
(74) Representative: Henkel IP Department

(57) **Abstract**

Water-soluble films, single dose packs, and methods for producing and using the same are disclosed. The water-soluble film includes polyvinyl alcohol and about 9000 ppm to about 150,000 ppm propylene glycol, about 0 ppm to about 230,000 ppm glycerin, and about 3,000 ppm to about 170,000 ppm polyethylene glycol. The single dose pack has a container that includes the water-soluble film. The single dose pack further includes a wash composition encapsulated within the container. The wash composition includes a detergent surfactant, water present in an amount of from about 8 to about 40 weight percent, based on the total weight of the wash composition, and a non-aqueous solvent mixture including propylene glycol, glycerin, and polyethylene glycol in an amount of from about 15 to about 50 weight percent, based on the total weight of the wash composition.

## Description

### TECHNICAL FIELD

The technical field relates to water-soluble films and detergent packaged in single dose packs using water-soluble films, and methods of producing the same. More particularly, the present disclosure relates to single dose packs, made from water-soluble films, with solvent loadings that are higher than typical, and methods of producing the same.

### BACKGROUND

Detergent packaged in single dose packs is available for a variety of washing activities, such as clothes laundering and dish washing. The single dose pack provides a premeasured quantity of detergent that is easy to carry and convenient to use. The single dose pack minimizes over-dosage of detergent and has proven popular with consumers.

Many single dose packs include a wash composition that is encapsulated within a film, where the wash composition includes detergent, solvents, and other components useful for cleaning. Consumers are accustomed to a standard size of single dose pack, so changes in the wash composition that reduce the total volume may be compensated for by increasing the solvent loading to maintain a more constant single dose pack size. However, increases in the solvent loading typically result in degradation of the film over time. The film is typically soluble in water, so increases in the water loading have an increased propensity to degrade the film. Water is one solvent often utilized in single dose packs. In some cases, a single dose pack can fail and produce an unpleasant mess, such as when the single dose pack may become "sticky," deformed, or otherwise less attractive to a consumer. In some cases, the film can rupture before use. A ruptured single dose pack can contaminate other single dose packs stored in proximity, so an entire container of single dose packs becomes unpleasant to use.

Typically, liquid laundry detergents with high water contents are not encapsulated in water-soluble films to avoid film degradation during storage. The advantages of liquid laundry detergents over granules, pastes, and gels include aesthetic appearance and quicker delivery to and dispersibility of the detergent in a wash liquor, especially in a cool or cold water washing process.

Including additional solvents in the wash composition also increases the overall size, rigidity, and stability of the single dose pack. The increased size and rigidity results in a single dose pack that is more aesthetically pleasing to handle. Furthermore, increased size and rigidity produces a single dose pack that looks more "full" to consumers, where the single dose pack does not deform or collapse as much during storage.

Accordingly, it is desirable to provide a single dose pack with increased solvent loading where the film remains structurally sound for extended periods, and methods of producing such single dose packs. In addition, it is desirable to provide single dose packs with non-aqueous solvents that mitigate the water solubility of an encapsulating film, and methods of producing the same. Furthermore, other desirable features and characteristics will become apparent from the subsequent detailed description and the appended claims, taken in conjunction with the accompanying drawings and the foregoing technical field and background.

### BRIEF SUMMARY

In one aspect of the present disclosure, the inventors herein unexpectedly discovered that the film of the single dose pack can be equilibrated with non-aqueous solvents contained in the wash composition to become suitably "tuned" to store a wash composition within the film that has a higher than typical solvent loading while maintaining favorable pack haptics. Accordingly, the present disclosure relates to single dose pack films that have optimally tuned levels of propylene glycol, glycerin, and polyethylene glycol within the film itself. These levels in the film may originate from the original manufacture of the film, prior to forming the film into a single dose pack, or, these levels may originate from equilibration with a suitable wash composition within the pack over one or more weeks of storage. The inventors herein were able to discover optimally-equilibrated films having a certain range of propylene glycol, glycerin, and polyethylene glycol.

As such, in accordance with one embodiment of the present disclosure, a water-soluble film includes polyvinyl alcohol and about 9000 ppm to about 150,000 ppm propylene glycol, about 0 ppm to about 230,000 ppm glycerin, and about 3,000 ppm to about 170,000 ppm polyethylene glycol.

Furthermore, in accordance with another embodiment of the present disclosure, a single dose pack includes a container. The container includes a water-soluble film. The water-soluble film includes polyvinyl alcohol and about 9000 ppm to about 150,000 ppm propylene glycol, about 0 ppm to about 230,000 ppm glycerin, and about 3,000 ppm to about 170,000 ppm polyethylene glycol. The single dose pack further includes a wash composition encapsulated within the container. The wash composition includes a detergent surfactant, water present in an amount of from about 8 to about 40 weight percent, based on the total weight of the wash composition, and a non-aqueous solvent mixture including propylene glycol, glycerin, and polyethylene glycol in an amount of from about 15 to about 50 weight percent, based on the total weight of the wash composition.

In another aspect of the present disclosure, a film can be provided that initially and already includes the preferred specified amounts of propylene glycol, glycerin, and polyethylene glycol (i.e., before the film is formed into the container of a single dose pack). This water-soluble film includes polyvinyl alcohol and about 9000 ppm to about 150,000 ppm propylene glycol, about 0 ppm to about 230,000 ppm glycerin, and about 3,000 ppm to about 170,000 ppm polyethylene glycol. In a further aspect of this embodiment, such a film may be formed by adding the specified non-aqueous solvents at suitable levels to the polyvinyl alcohol and then forming the film from this mixture, or by pre-treating a polyvinyl alcohol film with a solution of the non-aqueous solvents to pre-equilibrate the film for a period of time.

In accordance with another embodiment, a method for producing a water-soluble film includes the steps of providing a film including polyvinyl alcohol (PVOH) and exposing the film to a mixture of non-aqueous solvents including propylene glycol, glycerin, and polyethylene glycol for a period of time to allow the film to equilibrate with the non-aqueous solvent mixture.

In accordance with yet another embodiment, a method of producing a single dose pack includes forming a wash composition, which includes a detergent surfactant, water present in an amount of from about 8 to about 40 weight percent, based on the total weight of the wash composition, and a non-aqueous solvent mixture including propylene glycol, glycerin, and polyethylene glycol in an amount of from about 15 to about 50 weight percent, based on the total weight of the wash composition. The method further includes encapsulating the wash composition within a container to form the single dose pack, wherein the container includes a water-soluble film, which includes polyvinyl alcohol and about 9000 ppm to about 150,000 ppm propylene glycol, about 0 ppm to about 230,000 ppm glycerin, and about 3,000 ppm to about 170,000 ppm polyethylene glycol.

### DETAILED DESCRIPTION

The following detailed description is merely exemplary in nature and is not intended to limit the single dose pack, or the method for producing or using the same. Furthermore, there is no intention to be bound by any theory presented in the preceding background or the following detailed description.

The term "about" as used in connection with a numerical value throughout the specification and the claims denotes an interval of accuracy, familiar and acceptable to a person skilled in the art. In general, such interval of accuracy is ±10%. Thus, "about ten" means 9 to 11. All numbers in this description indicating amounts, ratios of materials, physical properties of materials, and/or use are to be understood as modified by the word "about," except as otherwise explicitly indicated.

A single dose pack is formed by encapsulating a wash composition within a container, where the container includes a film. The film of the single dose pack can be equilibrated with non-aqueous solvents contained in the wash composition to become suitably "tuned" to store a wash composition within the film that has a higher than typical solvent loading while maintaining favorable pack haptics. Accordingly, the present disclosure relates to single dose pack films that have optimally tuned levels of propylene glycol, glycerin, and polyethylene glycol within the film itself. These levels in the film may originate from the original manufacture of the film, prior to forming the film into a single dose pack, or, these levels may originate from equilibration with a suitable wash composition within the pack over one or more weeks of storage

In some embodiments, the film forms one half or more of the container, where the container may also include dyes, print, or other components in some embodiments. The film may have a thickness of from about 25 to about 200 microns (µm), or from about 45 to about 100 µm, or from about 70 to about 90 µm in various embodiments. The film is water soluble such that the film will completely dissolve when an exterior of the film is exposed to water, such as in a washing machine typically used for laundry. When the film dissolves, the container is ruptured and the contents are released. As used herein, "water soluble" means at least 2 grams of the solute (the film in one example) will dissolve in 5 liters of solvent (water in one example,) for a solubility of at least 0.4 grams per liter (g/l), at a temperature of 25 degrees Celsius (° C) unless otherwise specified. Suitable films for packaging are completely soluble in water at temperatures of about 5° C or greater.

The film is desirably strong, flexible, shock resistant, and non-tacky during storage at both high and low temperatures and high and low humidities. In an exemplary embodiment, the film is initially formed from polyvinyl acetate, and at least a portion of the acetate functional groups are hydrolyzed to produce alcohol groups. Therefore, the film includes polyvinyl alcohol (PVOH), and may include a higher concentration of PVOH than polyvinyl acetate. Such films are commercially available with various levels of hydrolysis, and thus various concentrations of PVOH, and in an exemplary embodiment the film initially has about 85 percent of the acetate groups hydrolyzed to alcohol groups. Some of the acetate groups may further hydrolyze in use, so the final concentration of alcohol groups may be higher than the concentration at the time of packaging. In some embodiments, the film may also include varying amounts of a compatibilizing agent (for example, carboxymethyl cellulose), sugar alcohol plasticizers (for example, xylitol and/or sorbitol), glycerin, propylene glycol, and process-aid surfactants.

It has been found that the inclusion of certain non-aqueous solvents into the film composition results in improved film dissolution in the wash water, improved pack haptics, as well as a reduction in the loss of water weight through the film over time due to transpiration. These non-aqueous solvents include, for example, glycerin, polyethylene glycol, and propylene glycol. Specifically, it has been found that certain equilibrium solvent concentrations within the film enable the incorporation of higher water levels into the wash composition. The inclusion of these non-aqueous solvents can be incorporated through their diffusion from the liquid detergent to the film. Alternatively, they can be included during the manufacturing of the film itself. That way, the film would be pre-equilibrated prior to the addition of liquid detergent to the pack. Either method allows for an increase of water in the wash composition, which leads to cost savings, simplification of raw materials on hand, as well as a more sustainable product.

In accordance with an exemplary embodiment, the amount of propylene glycol included in the film composition may range from about 9000 ppm to about 150,000 ppm, for example from about 9000 ppm to about 90,000 ppm, or about 15,000 ppm to about 150,000 ppm, or about 15,000 to about 90,000 ppm. In other embodiments, the amount of propylene glycol included in the film composition may range from about 9,000 ppm to about 30,000 ppm, about 30,000 ppm to about 50,000 ppm, about 50,000 ppm to about 70,000 ppm, about 4,000 ppm to about 90,000 ppm, about 90,000 ppm to about 110,000 ppm, about 110,000 ppm to about 130,000 ppm, or from about 130,000 ppm to about 150,000 pp. Furthermore, the amount of glycerin included in the film composition may range from about 0 ppm to about 230,000 ppm, for example from about 0 ppm to about 190,000 ppm, or from about 5,000 ppm to about 230,000 ppm, or from about 5,000 ppm to about 190,000 ppm. In other embodiments, the amount of glycerin included in the film composition may be from about 5,000 ppm to about 30,000 ppm, or from about 30,000 ppm to about 60,000 ppm, or from about 60,000 ppm to about 90,000 ppm, or from about 90,000 ppm to about 120,000 ppm, or from about 120,000 ppm to about 150,000 ppm, or from about 150,000 ppm to about 190,000 ppm, or from about 190,000 ppm to about 230,000 ppm. Still further, the amount of polyethylene glycol included in the film composition may range from about 3,000 ppm to about 170,000 ppm, for example from about 4,000 ppm to about 170,000 ppm, or from about 3,000 ppm to about 130,000 ppm, or from about 4,000 ppm to about 130,000 ppm. In other embodiments, the amount of polyethylene glycol included in the film composition may range from about 3,000 ppm to about 30,000 ppm, or from about 30,000 ppm to about 60,000 ppm, or from about 60,000 ppm to about 80,000 ppm, or from about 80,000 ppm to about 100,000 ppm, or from about 100,000 ppm to about 120,000 ppm, or from about 120,000 ppm to about 145,000 ppm, or from about 145,000 ppm to about 170,000 ppm. The polyethylene glycol used in some embodiments may be a relatively low molecular weight polyethylene glycol, wherein, as used in the present disclosure, a relatively low molecular weight polyethylene glycol means one having a number-average molecular weight of about 600 Daltons or less (such as down to about 100 Daltons). In a particular embodiment, the polyethylene glycol used may be one having a number-average molecular weight of about 400 Daltons. In other embodiments, the PEG may have number-average molecular weight of about 100 to about 300 Daltons, or about 300 to about 500 Daltons, or about 500 to about 600 Daltons.

The single dose pack may be formed from a container having a single section, but the single dose pack may be formed from containers with two or more different sections in alternate embodiments. In embodiments with a container having two or more sections, the contents of the different sections may or may not the same. In some embodiments, the single dose pack is formulated and configured for cleaning laundry, but other cleaning purposes are also possible. The wash composition is positioned within the container, and the container is sealed to encase and enclose the wash composition. The wash composition is typically in direct contact with the film of the container within the single dose pack. The film of the container is sealable by heat, heat and water, ultrasonic methods, or other techniques, and one or more sealing techniques may be used to enclose the wash composition within the container.

In an exemplary embodiment, the wash composition is liquid when encapsulated within the container. The liquid wash composition has a viscosity of from about 50 to about 2,500 centipoise, or from about 100 to about 500 centipoise in different embodiments, where "viscosity," as used herein, means the viscosity measured by a rotational viscometer at a temperature of 25 degrees Celsius (°C). The liquid form facilitates rapid delivery and dispersion of the wash composition once the container ruptures, and this rapid dispersion can aid cleaning. In an exemplary embodiment, the single dose pack is sized to provide a desired quantity of wash composition for one load of laundry or one batch of dishes in a dishwasher. The single dose pack may also be sized for a fraction of a desired quantity, such as one half of a load of laundry, so a user can adjust the amount of detergent added without having to split a single dose pack. In an exemplary embodiment, the single dose pack has a weight of from about 15 to about 50 grams. In alternate embodiments, the single dose pack is from about 15 to about 40 grams, or from about 17 to about 30 grams.

A single dose pack that includes the concentrations of non-aqueous solvents in its film as described herein may be more likely to have favorable pack haptics, film stability, and desirable dissolution rates. Single dose packs tend to lose some pack height with storage, and the amount pack height loss is a good indication of the haptics of the pack. A single dose pack with a low amount of pack height loss has a more appealing appearance to a user, where a package with several single dose packs looks fuller and each single dose pack appears fresher and more appealing. The concentration of non-aqueous solvents in the film as described herein has a significant effect on the amount of pack height loss.

As noted above, the film composition can be prepared initially to include the above-specified amounts of non-aqueous solvents. For example, a film can be provided that initially and already includes the preferred specified amounts of propylene glycol, glycerin, and polyethylene glycol (i.e., before the film is formed into the container of a single dose pack). In a further aspect of this embodiment, such a film may be formed by adding the specified non-aqueous solvents at suitable levels to the polyvinyl alcohol to make a film stock and then forming the film from this film stock mixture. Alternatively, such a film may be formed by pre-treating a polyvinyl alcohol film with a mixture of the non-aqueous solvents for a period of time, such as from several hours to several days, to pre-equilibrate the film. As such, the present disclosure also provides a method of preparing the film by pretreating (equilibrating) the film with the solvents before using the film, or by preparing a film stock including polyvinyl alcohol, and the specified amounts of propylene glycol, glycerin, and polyethylene glycol and preparing the film on the basis of this film stock.

In other embodiments, the wash composition is formulated such that, over a time period of about one or more weeks, when stored at about room temperature, the non-aqueous solvent composition (mixture) of the wash composition equilibrates with the film, such that after the aforesaid period of storage, the film composition includes the above-specified amount of non-aqueous solvent. In general, the wash composition includes a detergent surfactant, water present in an amount of from about 8 to about 40 weight percent, based on the total weight of the wash composition, and a non-aqueous solvent mixture including propylene glycol, glycerin, and polyethylene glycol in an amount of from about 15 to about 50 weight percent, based on the total weight of the wash composition, as will be described in greater detail below. Non-aqueous solvents in these amounts are suitable for equilibrating those solvents into the PVOH film after a period of one week or more in storage, prior to use. Wash compositions suitable for use in the present disclosure that have been found to result in such equilibration with the film are described in greater detail below.

A plurality of components are combined to form a wash composition, where the wash composition is typically prepared prior to being encapsulated within the container. The plurality of components include water, and as mentioned above the film is soluble in water. The film remains structurally sound and intact prior to use of the single dose pack, where the single dose pack is immersed in a large quantity of water in use. A "large" quantity of water is at least about 100 times the weight of the single dose pack. For example, a single dose pack having a weight of from about 5 to about 50 grams may be immersed in from about 5 to about 50 liters of water in use. As used herein, "structurally sound" means the container and the film do not rupture or leak under typical storage conditions, such as about 0.5 to about 1.5 atmospheres of pressure, temperatures of about -10 to about 35° C, and a relative humidity of about 1 to about 80% for a period of at least 1 week. Structurally sound also means the container and the film are not tacky or sticky to the touch.

Water is included in the wash composition at a percentage of from about 8 to about 40 weight percent, or present in an amount of from about 10 to about 35 weight percent, or present in an amount of from about 10 to about 30 weight percent, or present in an amount of from about 15 to about 30 weight percent in various embodiments, based on a total weight of the wash composition. In other embodiments, water may be present in the wash composition at a percentage of from about 8 percent to about 20 percent, or from about 20 percent to about 30 percent, or from about 30 percent to about 40 percent. Water may be added to the wash composition directly or as a component of other ingredients, or directly and as a component of other ingredients.

The solubility of the film in water should be moderated to keep the film structurally sound prior to use. The water in the wash composition directly contacts the film in the single dose pack in many embodiments. However, the addition of certain other components in the wash composition can moderate the solubility of the film and thereby protect the film from dissolving in the water incorporated in the wash composition. It has been found that the inclusion of some non-aqueous solvents in the wash composition does moderate the solubility of the film. As such, adding the non-aqueous solvent to the wash composition allows for single dose packs where the wash composition includes water present in amounts of up to about 40 weight percent, based on the total weight of the wash composition, and where the film remains structurally sound during storage for a time period of from about 1 month to about 24 months or more. Structurally sound also means the film is not tacky or sticky to the touch.

The non-aqueous solvents are included (as a mixture) in the wash composition at amounts (said amount being the overall sum of propylene glycol, glycerin, and polyethylene glycol) of from about 15 to about 50 weight percent, or amount of from about 20 to about 50 weight percent, or amounts of from about 25 to about 50 weight percent, or amounts of from about 30 to about 50 weight percent in various embodiments, based on the total weight of the wash composition. In other embodiments, the non-aqueous solvents are included in the wash composition at amount of from about 20 percent to about 30 percent, or from about 30 percent to about 40 percent, or from about 40 percent to about 50 percent.

With regard to the non-aqueous solvent mixture of the wash composition, each solvent may have a different compositional percentage of the combined total weight of non-aqueous solvents (with the three specified non-aqueous solvents adding to 100%). For example, propylene glycol may be about 0% to about 1000%, or about 10% to about 60%, or about 20% to about 60%, or about 20% to about 50% of the combined weight of the three non-aqueous solvents present in the wash composition. In other embodiments, propylene glycol may be about 10% to about 20%, or about 20% to about 30%, or about 30% to about 40 %, or about 40% to about 50%, or about 50% to about 60% of the combined weight of the three non-aqueous solvents present in the wash composition. Likewise, glycerin may be about 0% to about 100%, or about 10% to about 60%, or about 20% to about 60%, or about 20% to about 50% of the combined weight of the three non-aqueous solvents present in the wash composition. In other embodiments, glycerin may be about 10% to about 20%, or about 20% to about 30%, or about 30% to about 40 %, or about 40% to about 50%, or about 50% to about 60% of the combined weight of the three non-aqueous solvents present in the wash composition. Still further, polyethylene glycol may be about 0% to about 100%, or about 10% to about 60%, or about 20% to about 60%, or about 20% to about 50% of the combined weight of the three non-aqueous solvents present in the wash composition. In other embodiments, polyethylene glycol may be about 10% to about 20%, or about 20% to about 30%, or about 30% to about 40 %, or about 40% to about 50%, or about 50% to about 60% of the combined weight of the non-aqueous solvents present in the wash composition.

Various ratios of added water to propylene glycol to glycerin to polyethylene glycol within the wash composition have been found to result in a suitable equilibrated content of the non-aqueous solvents within the film. For example, added water may have a weight percentage of up to about 40% of combined water and non-aqueous solvents, based on the total combined weight of water and non-aqueous solvents. Furthermore, each of propylene glycol, glycerin, and polyethylene glycol may have a weight percentage of from about 10% to about 50% of combined water and non-aqueous solvents, such as about 20% to about 40%, based on the total combined weight of water and non-aqueous solvents.

For purposes of greater explication, TABLE 1 presents weight percentages in accordance with twenty-one exemplary wash compositions of the present disclosure for the added water, propylene glycol, glycerin, and polyethylene glycol, based on the total combined weight of the added water and the listed non-aqueous solvents in the wash composition (TABLE 2, set forth later in this disclosure, provides the weight percentage of each such component on the basis of the overall weight of an exemplary wash composition). It should be appreciated that the values shown in TABLE 1 may be understood to allow the person having ordinary skill in the art to interpolate/extrapolate other suitable percentages of the added water and non-aqueous solvents for use in a suitable wash composition.

**TABLE 1**

| Ex. Composition # | Added Water | Propylene Glycol | Glycerin | Polyethylene Glycol 400 |
|---|---|---|---|---|
| 1 | 40% | 30% | 30% | 0% |
| 2 | 40% | 0% | 0% | 60% |
| 3 | 0% | 0% | 0% | 100% |
| 4 | 40% | 0% | 60% | 0% |
| 5 | 20% | 27% | 27% | 26% |
| 6 | 40% | 20% | 20% | 20% |
| 7 | 20% | 0% | 0% | 80% |
| 8 | 0% | 0% | 100% | 0% |
| 9 | 0% | 34% | 33% | 33% |
| 10 | 20% | 80% | 0% | 0% |
| 11 | 0% | 0% | 50% | 50% |
| 12 | 0% | 50% | 50% | 0% |
| 13 | 40% | 30% | 0% | 30% |
| 14 | 20% | 40% | 40% | 0% |
| 15 | 40% | 60% | 0% | 0% |
| 16 | 40% | 0% | 30% | 30% |
| 17 | 0% | 100% | 0% | 0% |
| 18 | 20% | 0% | 80% | 0% |
| 19 | 0% | 50% | 0% | 50% |
| 20 | 20% | 0% | 40% | 40% |
| 21 | 20% | 40% | 0% | 40% |

Besides the added water and non-aqueous solvents as described above, the wash composition may optionally include further non-aqueous solvents (which do not form a part of the above-described ratios, yet may be useful for purposes other than film properties). For example, further non-aqueous solvents that may be included in the wash composition are ethylene glycol, ethanol, and one or more 4C+ compounds. The term "4C+ compound" refers to one or more of: polyethylene glycol esters such as polyethylene glycol stearate, propylene glycol laurate, and/or propylene glycol palmitate; methyl ester ethoxylate; diethylene glycol; dipropylene glycol; sorbitol; tetramethylene glycol; butylene glycol; pentanediol; hexylene glycol; heptylene glycol; octylene glycol; 2-methyl, 1,3 propanediol; xylitol; mannitol; erythritol; dulcitol; inositol; adonitol; triethylene glycol; glycol ethers, such as ethylene glycol monobutyl ether, diethylene glycol monobutyl ether, triethylene glycol monobutyl ether, ethylene glycol monopropyl ether, diethylene glycol monoethyl ether, triethylene glycol monoethyl ether, diethylene glycol monomethyl ether, and triethylene glycol monomethyl ether; tris (2-hydroxyethyl)methyl ammonium methylsulfate; ethylene oxide/propylene oxide copolymers with a number average molecular weight of 3,500 Daltons or less; and ethoxylated fatty acids.

The wash composition may include other components as well. For example, the wash composition may include an ionic detergent surfactant, where the ionic detergent surfactant is formulated for laundry in an exemplary embodiment. The ionic detergent surfactant may include one or more surfactants, including cationic and/or anionic surfactants, in various embodiments. The ionic detergent surfactant may be present in the wash composition at a concentration of from about 5 to about 55 weight percent in one embodiment, but the ionic detergent surfactant may be present in the wash composition at a concentration of about 10 to about 30 weight percent or from about 20 to about 25 weight percent in alternate embodiments, where weight percents are based on a total weight of the wash composition.

Suitable ionic detergent surfactants that are anionic include soaps which contain sulfate or sulfonate groups, including those with alkali metal ions as cations. Usable soaps include alkali metal salts of saturated or unsaturated fatty acids with 12 to 18 carbon (C) atoms. Such fatty acids may also be used in incompletely neutralized form. Usable ionic detergent surfactants of the sulfate type include the salts of sulfuric acid semi esters of fatty alcohols with 12 to 18 C atoms, and/or alcohol ethoxysulfates. Usable ionic detergent surfactants of the sulfonate type include alkane sulfonates with 12 to 18 C atoms and olefin sulfonates with 12 to 18 C atoms, such as those that arise from the reaction of corresponding mono-olefins with sulfur trioxide, alpha-sulfofatty acid esters such as those that arise from the sulfonation of fatty acid methyl or ethyl esters, and lauryl ether sulfates.

Suitable ionic detergent surfactants that are cationic may include textile-softening substances of the general formula X, XI, or XII as illustrated below: 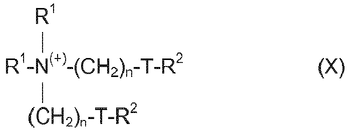 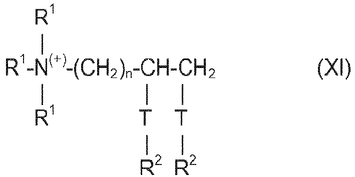 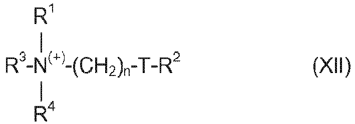 in which each R¹ group is mutually independently selected from among C₁₋₆ alkyl, alkenyl or hydroxyalkyl groups; each R² group is mutually independently selected from among C₈₋₂₈ alkyl or alkenyl groups; R³ = R¹ or (CH₂)ₙ-T-R²; R⁴ = R¹ or R² or (CH₂)ₙ-T-R²; T = -CH₂-, -O-CO-, or -CO-O-, and n is an integer from 0 to 5. The ionic detergent surfactants that are cationic may include conventional anions of a nature and number required for charge balancing. Alternatively, the ionic detergent surfactant may include anionic detergent surfactants that may function to balance the charges with the cationic detergent surfactants. In some embodiments, ionic detergent surfactants that are cations may include hydroxyalkyltrialkylammonium compounds, such as C₁₂₋₁₈ alkyl(hydroxyethyl)dimethyl ammonium compounds, and may include the halides thereof, such as chlorides or other halides. The ionic detergent surfactants that are cations may be especially useful for compositions intended for treating textiles.

In some embodiments, the anionic surfactant is a polyethoxylated alcohol sulfate, such as those sold under the trade name CALFOAM® 303 (Pilot Chemical Company, California). Such materials, also known as alkyl ether sulfates (AES) or alkyl polyethoxylate sulfates, are those which correspond to the following formula (XIII):

R'-O-(C2H4O)n-SO3M' (XIII)

wherein R' is a C8-C20 alkyl group, n is from 1 to 20, and M' is a salt-forming cation, preferably, R' is C10-C18 alkyl, n is from 1 to 15, and M' is sodium, potassium, ammonium, alkylammonium, or alkanolammonium. In another embodiment, R' is a C12-C16 alkyl, n is from 1 to 6 and M' is sodium. In another embodiment, the alkyl ether sulfate is sodium lauryl ether sulphate (SLES).

In some embodiments, the anionic surfactant can be linear alkylbenzene sulfonic acid (LAS) or a salt thereof, alkyl ethoxylated sulphate, alkyl propoxy sulphate, alkyl sulphate, or a mixture thereof. Linear alkylbenzenesulfonate (LAS) is a water soluble salt of a linear alkyl benzene sulfonate having between 8 and 22 carbon atoms of the linear alkyl group. The salt can be an alkali metal salt, or an ammonium, alkylammonium, or alkanolammonium salt. In one embodiment, the LAS includes an alkali metal salt of C₁₀-C₁₆ alkyl benzene sulfonic acids, such as C₁₁-C₁₄ alkyl benzene sulfonic acids.

However, in other embodiments, the liquid compositions are substantially free of LAS. In other embodiments, the liquid compositions are substantially free of a sulfate surfactant.

Nonionic detergent surfactants may optionally be present in the wash composition at a concentration of from about 0 to about 60 weight percent, or from about 5 to about 50 weight percent, or from about 10 to about 30 weight percent, or from about 20 to about 40 weight percent in various embodiments. Suitable nonionic detergent surfactants include alkyl glycosides and ethoxylation and/or propoxylation products of alkyl glycosides or linear or branched alcohols in each case having 12 to 18 C atoms in the alkyl moiety and 3 to 20, or 4 to 10, alkyl ether groups. Corresponding ethoxylation and/or propoxylation products of N-alkylamines, vicinal diols, fatty acid esters and fatty acid amides, which correspond to the alkyl moiety in the stated long-chain alcohol derivatives, may furthermore be used. Alkylphenols having 5 to 12 C atoms may also be used in the alkyl moiety of the above described long-chain alcohol derivatives.

Examples of nonionic surfactants suitable for the present invention include, but are not limited to, polyalkoxylated alkanolamides, polyoxyalkylene alkyl ethers, polyoxyalkylene alkylphenyl ethers, polyoxyalkylene sorbitan fatty acid esters, polyoxyalkylene sorbitol fatty acid esters, polyoxyethylene polyoxypropylene alkyl ethers, polyoxyalkylene castor oils, polyoxyalkylene alkylamines, glycerol fatty acid esters, alkylglucosamides, alkylglucosides, alkylamine oxides, amine oxide surfactants, alkoxylated fatty alcohols, or a mixture thereof. In some embodiments, the nonionic surfactant is alcohol ethoxylate (AE), alcohol propoxylate, or a mixture thereof. In other embodiments, the nonionic surfactant is AE.

The AE may be primary and secondary alcohol ethoxylates, especially the C₈-C₂₀ aliphatic alcohols ethoxylated with an average of from 1 to 20 moles of ethylene oxide per mole of alcohol, and more especially the C₁₀-C₁₅ primary and secondary aliphatic alcohols ethoxylated with an average of from 1 to 10 moles, or from 3 to 8 moles of ethylene oxide per mole of alcohol.

Exemplary AEs are the condensation products of aliphatic C₈-C₂₀, preferably Cs-C₁₆, primary or secondary, linear or branched chain alcohols with ethylene oxide. In some embodiments, the alcohol ethoxylates contain 1 to 20, or 3 to 8 ethylene oxide groups, and may optionally be end-capped by a hydroxylated alkyl group.

In one embodiment, the AE has Formula (XIV):

R₂-(-O-C₂H₄-)ₘ-OH (XIV)

wherein R² is a hydrocarbyl group having 8 to 16 carbon atoms, 8 to 14 carbon atoms, 8 to 12 carbon atoms, or 8 to 10 carbon atoms; and m is from 1 to 20, or 3 to 8.

The hydrocarbyl group may be linear or branched, and saturated or unsaturated. In some embodiments, R² is a linear or branched C₈-C₁₆ alkyl or a linear group or branched C₈-C₁₆ alkenyl group. Preferably, R₂ is a linear or branched C₈-C₁₆ alkyl, C₈-C₁₄ alkyl, or C₈-C₁₀ alkyl group. In case (e.g., commercially available materials) where materials contain a range of carbon chain lengths, these carbon numbers represent an average. The alcohol may be derived from natural or synthetic feedstock. In one embodiment, the alcohol feedstock is coconut, containing predominantly C₁₂-C₁₄ alcohol, and oxo C₁₂-C₁₅ alcohols.

One suitable AE is Tornado® 25-7 (available from Air Product). Other suitable AEs include Genapol® C200 (available from Clariant), which is a coco alcohol having an average degree of ethoxylation of 20.

Several other components may optionally be added to and included in the wash composition, including but not limited to enzymes, peroxy compounds, bleach activators, anti-redeposition agents, neutralizers, optical brighteners, foam inhibitors, chelators, bittering agents, dye transfer inhibitors, soil release agents, water softeners, and other components. A partial, non-exclusive list of additional components (not illustrated) that may be added to and included in the wash composition include electrolytes, pH regulators, graying inhibitors, anti-crease components, bleach agents, colorants, scents, processing aids, antimicrobial agents, and preservatives.

Possible enzymes that may be in the wash composition contemplated herein include one or more of a protease, lipase, cutinase, amylase, carbohydrase, cellulase, pectinase, mannanase, arabinase, galactanase, xylanase, oxidase, (e.g., a laccase), and/or peroxidase, but others are also possible. In general, the properties of the selected enzyme(s) should be compatible with the selected wash composition, (i.e., pH-optimum, compatibility with other enzymatic and non-enzymatic ingredients, etc.). The detergent enzyme(s) may be included in the wash composition by adding separate additives containing one or more enzymes, or by adding a combined additive including all the enzymes that are added to the wash composition. The enzyme(s) should be present in the wash composition in effective amounts, such as from about 0 weight percent to about 5 weight percent of enzyme, or from about 0.001 to about 1 weight percent, or from about 0.2 to about 2 weight percent, or from about 0.5 to about 1 weight percent, based on the total weight of the wash composition, in various embodiments.

As alluded to above, a peroxy compound may optionally be present in the wash composition. Exemplary peroxy compounds include organic peracids or peracidic salts of organic acids, such as phthalimidopercaproic acid, perbenzoic acid or salts of diperdodecanedioic acid, hydrogen peroxide and inorganic salts that release hydrogen peroxide under the washing conditions, such as perborate, percarbonate and/or persilicate. Hydrogen peroxide may also be produced with the assistance of an enzymatic system, i.e. an oxidase and its substrate. Other possible peroxy compounds include alkali metal percarbonates, alkali metal perborate monohydrates, alkali metal perborate tetrahydrates or hydrogen peroxide. Peroxy compounds may be present in the wash composition at an amount of from about 0 to about 50 weight percent, or an amount of from about 3 to about 30 weight percent, or an amount of from about 3 to about 10 weight percent, based on the total weight of the wash composition, in various embodiments.

Bleach activators may optionally be added and included in the wash composition. Conventional bleach activators that form peroxycarboxylic acid or peroxyimidic acids under perhydrolysis conditions and/or conventional bleach-activating transition metal complexes may be used. The bleach activator optionally present may include, but is not limited to, one or more of: N- or O-acyl compounds, for example polyacylated alkylenediamines, such as tetraacetylethylenediamine; acylated glycolurils, such as tetraacetylglycoluril; N-acylated hydantoins; hydrazides; triazoles; urazoles; diketopiperazines; sulfurylamides and cyanurates; carboxylic anhydrides, such as phthalic anhydride; carboxylic acid esters, such as sodium isononanoylphenolsulfonate; acylated sugar derivatives, such as pentaacetyl glucose; and cationic nitrile derivatives such as trimethylammonium acetonitrile salts.

To avoid interaction with peroxy compounds during storage, the bleach activators may be coated with shell substances or granulated prior to addition to the wash composition, in a known manner. As such, the bleach activator and/or other components may be present in a liquid wash composition as a free or floating particulate. Exemplary embodiments of the coating or shell substance include tetraacetylethylenediamine granulated with the assistance of carboxymethylcellulose and having an average grain size of 0.01 mm to 0.8 mm, granulated 1,5-diacetyl-2,4-dioxohexahydro-1,3,5-triazine, and/or trialkylammonium acetonitrile formulated in particulate form. In various embodiments, the bleach activators may be present in the wash composition in quantities of from about 0 to about 8 weight percent, or from about 0 to about 6 weight percent, or from about 0 to about 4 weight percent, in each case relative to the total weight of the wash composition.

One or more anti-redeposition agents may also be optionally included in the wash composition. Anti-redeposition agents include polymers with a soil detachment capacity, which are also known as "soil repellents" due to their ability to provide a soil-repelling finish on the treated surface, such as a fiber. Anti-redeposition agents include polymers with a soil detachment capacity. One example in regard to polyesters includes copolyesters prepared from dicarboxylic acids, such as adipic acid, phthalic acid or terephthalic acid. In an exemplary embodiment, an anti-redeposition agents includes polyesters with a soil detachment capacity that include those compounds which, in formal terms, are obtainable by esterifying two monomer moieties, the first monomer being a dicarboxylic acid HOOC-Ph-COOH and the second monomer a diol HO-(CHR¹¹-)aOH, which may also be present as a polymeric diol H-(O-(CHR¹¹)ₐ)_{b}OH. Ph here means an ortho-, meta- or para-phenylene residue that may bear 1 to 4 substituents selected from alkyl residues with 1 to 22 C atoms, sulfonic acid groups, carboxyl groups and mixtures thereof. R¹¹ means hydrogen or an alkyl residue with 1 to 22 C atoms and mixtures thereof, "a" means a number from 2 to 6 and "b" means a number from 1 to 300. The polyesters obtainable therefrom may contain not only monomer diol units -O-(CHR¹¹-)ₐO- but also polymer diol units -(O-(CHR¹¹-)ₐ)_{b}O-. The molar ratio of monomer diol units to polymer diol units may amount to from about 100:1 to about 1:100, or from about 10:1 to about 1:10 in another embodiment. In the polymer diol units, the degree of polymerization "b" may be in the range of from about 4 to about 200, or from about 12 to about 140 in an alternate embodiment. The average molecular weight of the polyesters with a soil detachment capacity may be in the range of from about 250 to about 100,000, or from about 500 to about 50,000 in an alternate embodiment. The acid on which the residue Ph is based may be selected from terephthalic acid, isophthalic acid, phthalic acid, trimellitic acid, mellitic acid, the isomers of sulfophthalic acid, sulfoisophthalic acid and sulfoterephthalic acid and mixtures thereof. Where the acid groups thereof are not part of the ester bond in the polymer, they may be present in salt form, such as an alkali metal or ammonium salt. Exemplary embodiments include sodium and potassium salts.

If desired, instead of the monomer HOOC-Ph-COOH, the polyester with a soil detachment capacity (the anti-redeposition agent) may include small proportions, such as no more than about 10 mole percent relative to the proportion of Ph with the above-stated meaning, of other acids that include at least two carboxyl groups. These include, for example, alkylene and alkenylene dicarboxylic acids such as malonic acid, succinic acid, fumaric acid, maleic acid, glutaric acid, adipic acid, pimelic acid, suberic acid, azelaic acid and sebacic acid. Exemplary diols HO-(CHR¹¹-)ₐOH include those in which R¹¹ is hydrogen and "a" is a number of from about 2 to about 6, and in another embodiment includes those in which "a" has the value of 2 and R¹¹ is selected from hydrogen and alkyl residues with 1 to 10 C atoms, or where R¹¹ is selected from hydrogen and alkyl residues with 1 to 3 C atoms in another embodiment. Examples of diol components are ethylene glycol, 1,2-propylene glycol, 1,3-propylene glycol, 1,4-butanediol, 1,5-pentanediol, 1,6-hexanediol, 1,8-octanediol, 1,2-decanediol, 1,2-dodecanediol and neopentyl glycol. The polymeric diols include polyethylene glycol with an average molar mass in the range from about 1000 to about 6000. If desired, these polyesters may also be end group-terminated, with end groups that may be alkyl groups with 1 to 22 C atoms or esters of monocarboxylic acids. The end groups attached via ester bonds may be based on alkyl, alkenyl and aryl monocarboxylic acids with 5 to 32 C atoms, or with 5 to 18 C atoms in another embodiment. These include valeric acid, caproic acid, enanthic acid, caprylic acid, pelargonic acid, capric acid, undecanoic acid, undecenoic acid, lauric acid, lauroleic acid, tridecanoic acid, myristic acid, myristoleic acid, pentadecanoic acid, palmitic acid, stearic acid, petroselinic acid, petroselaidic acid, oleic acid, linoleic acid, linolaidic acid, linolenic acid, eleostearic acid, arachidic acid, gadoleic acid, arachidonic acid, behenic acid, erucic acid, brassidic acid, clupanodonic acid, lignoceric acid, cerotic acid, melissic acid, benzoic acid, which may bear 1 to 5 substituents having a total of up to 25 C atoms, or 1 to 12 C atoms in another embodiment, for example tert-butylbenzoic acid. The end groups may also be based on hydroxymonocarboxylic acids with 5 to 22 C atoms, which for example include hydroxyvaleric acid, hydroxycaproic acid, ricinoleic acid, the hydrogenation product thereof, hydroxystearic acid, and ortho-, meta- and para-hydroxybenzoic acid. The hydroxymonocarboxylic acids may in turn be joined to one another via their hydroxyl group and their carboxyl group and thus be repeatedly present in an end group. The number of hydroxymonocarboxylic acid units per end group, i.e. their degree of oligomerization, may be in the range of from 1 to 50, or in the range of from 1 to 10 in another embodiment. In an exemplary embodiment, polymers of ethylene terephthalate and polyethylene oxide terephthalate, in which the polyethylene glycol units have molar weights of from about 750 to about 5000 and the molar ratio of ethylene terephthalate to polyethylene oxide terephthalate of from about 50:50 to about 90:10, are used alone or in combination with cellulose derivatives. The anti-redeposition agent is present in the wash composition at an amount of from about 0 to about 3 weight percent, or an amount of from about 0 to about 2 weight percent, or an amount of from about 0 to about 1 weight percent, based on the total weight of the wash composition, in various embodiments.

Neutralizers are optionally added to and included in the wash composition. Exemplary neutralizers include, but are not limited to, sodium hydroxide, triethanol amine, monoethanol amine, buffers, or other compounds that adjusts the pH of the wash composition. Neutralizers may be present in the wash composition at an amount of from about 0 to about 5 weight percent in some embodiments, based on the total weight of the wash composition, but in other embodiments the neutralizer may be present in the wash composition at an amount of from about 0 to about 3 weight percent, or an amount of from about 0 to about 2 weight percent, based on the total weight of the wash composition.

Optical brighteners may optionally be included in the wash composition. Optical brighteners adsorb ultraviolet and/or violet light and re-transmit it as visible light, typically a visible blue light. Optical brighteners include, but are not limited to, derivatives of diaminostilbene disulfonic acid or the alkali metal salts thereof. Suitable compounds are, for example, salts of 4,4'-bis(2-anilino-4-morpholino-1,3,5-triazinyl-6-amino)stilbene 2,2'-disulfonic acid or compounds of similar structure which, instead of the morpholino group, bear a diethanolamino group, a methylamino group, an anilino group or a 2-methoxyethylamino group. Optical brighteners of the substituted diphenylstyryl type may furthermore be present, such as the alkali metal salts of 4,4'-bis(2-sulfostyryl)diphenyl, 4,4'-bis(4-chloro-3-sulfostyryl)diphenyl, or 4-(4-chlorostyryl)-4'-(2-sulfostyryl)diphenyl. Mixtures of the above-stated optical brighteners may also be used. Optical brighteners may be present in the wash composition at an amount of from about 0 to about 1 weight percent in some embodiments, but in other embodiments optical brighteners are present in an amount of from about 0.01 to about 0.5 weight percent, or an amount of from about 0.05 to about 0.3 weight percent, or an amount of from 0.005 to about 5 weight percent, based on the total weight of the wash composition.

Foam inhibitors may also optionally be included in the wash composition. Suitable foam inhibitors include, but are not limited to, soaps of natural or synthetic origin, which include an elevated proportion of C₁₈-C₂₄ fatty acids. Suitable non-surfactant foam inhibitors are, for example, organopolysiloxanes and mixtures thereof with microfine, optionally silanized silica as well as paraffins, waxes, microcrystalline waxes and mixtures thereof with silanized silica or bis-fatty acid alkylenediamides. Mixtures of different foam inhibitors may also be used, for example mixtures of silicones, paraffins or waxes. In an exemplary embodiment, mixtures of paraffins and bistearylethylenediamide may be used. The wash composition may include the foam inhibitor at an amount of from about 0 to about 5 weight percent, but in other embodiments the foam inhibitor may be present at an amount of from about 0.05 to about 3 weight percent, or an amount of from about 0.5 to about 2 weight percent, based on the total weight of the wash composition.

Chelators bind and remove calcium, magnesium, or other metals from water, and may optionally be included in the wash composition. Many compounds can be used as water softeners, including but not limited to ethylenediaminetetraacetic acid (EDTA), nitrilotriacetic acid, diethylenetriaminepenta(methylenephosphonic acid), nitrilotris(methylenephosphonic acid), 1-hydroxyethane-1,1-diphosphonic acid, iminodisuccinic acid (IDS), or other chelating agents. Chelators may be present in the wash composition at an amount of from about 0 to about 5 weight percent in an exemplary embodiment, but in alternate embodiments the chelators are present at an amount of from about 0.01 to about 3 weight percent or an amount of from about 0.02 to about 1 weight percent, based on the total weight of the wash composition.

Bittering agents may optionally be added to hinder accidental ingestion of the single dose pack or the wash composition. Bittering agents are compositions that taste bad, so children or others are discouraged from accidental ingestion. Exemplary bittering agents include denatonium benzoate, aloin, and others. Bittering agents may be present in the wash composition at an amount of from about 0 to about 1 weight percent, or an amount of from about 0 to about 0.5 weight percent, or an amount of from about 0 to about 0.1 weight percent in various embodiments, based on the total weight of the wash composition.

The components of the wash composition are combined and mixed together with a mixer. Once mixed, the wash composition is encapsulated in the container, as described above, to form the single dose pack. The components of the wash composition may all be mixed at one time, or different components may be pre-mixed and then combined. A wide variety of mixers may be used in alternate embodiments, such as an agitator, an in-line mixer, a ribbon blender, an emulsifier, and others. The wash composition is placed in a container, and then the film of the container is sealed with a sealer, where the sealer may utilize heat, water, ultrasonic techniques, water and heat, pressure, or other techniques for sealing the container and forming the single dose pack. In embodiments wherein the desired non-aqueous film composition is achieved via equilibration with the wash composition over time, it should be noted that the manufactured single dose packs may be stored for a period of about one or more weeks at about room temperature prior to sale and/or use.

Another exemplary embodiment is also directed to the use of a single dose pack as described above in a cleaning process such as laundry and/or hard surface cleaning. In particular, an embodiment is directed to the use of a single dose pack in laundering of textile and fabrics, such as house hold laundry washing and industrial laundry washing. A further exemplary embodiment is directed to the use of a single dose pack in hard surface cleaning such as automated dish washing (ADW), car washing, and the cleaning of industrial surfaces.

The fabrics and/or garments subjected to a washing, cleaning, or textile care processes contemplated herein may be conventional washable laundry, such as household laundry. In some embodiments, the major part of the laundry is garments and fabrics, including but not limited to knits, woven fabrics, denims, non-woven fabrics, felts, yarns, and toweling. The fabrics may be cellulose based such as natural cellulosics, including cotton, flax, linen, jute, ramie, sisal or coir or manmade cellulosics (e.g., originating from wood pulp) including viscose/rayon, ramie, cellulose acetate fibers (tricell), lyocell or blends thereof. The fabrics may also be non-cellulose based such as natural polyamides including wool, camel, cashmere, mohair, rabbit, and silk, or the fabric may be a synthetic polymer such as nylon, aramid, polyester, acrylic, polypropylene and spandex/elastin, or blends of any of the above-mentioned products. Examples of blends are blends of cotton and/or rayon/viscose with one or more companion material such as wool, synthetic fibers (e.g., polyamide fibers, acrylic fibers, polyester fibers, polyvinyl alcohol fibers, polyvinyl chloride fibers, polyurethane fibers, polyurea fibers, aramid fibers), and cellulose-containing fibers (e.g., rayon/viscose, ramie, flax, linen, jute, cellulose acetate fibers, lyocell).

In one embodiment, the fabrics and/or garments are added to a washing machine, and the single dose pack is also added to the washing machine before wash water is added. In an alternate embodiment, the single dose pack may be added to an automatic detergent addition system of a washing machine, where the contents of the single dose pack are added to the wash water with the fabrics and/or garments after the washing process has begun. In yet another embodiment, the single dose pack is manually added to the fabrics and/or garments with the wash water after the washing process has started. The film dissolves and releases the wash composition into the aqueous wash water. The film is dissolved and washes out of the washing machine with the excess wash water, so there is nothing to collect from the fabrics and/or garments after the wash cycle. The fabrics and/or garments are laundered with the wash water and the contents of the single dose pack. The fabrics and/or garments may then be dried and processed as normal.

In an alternate embodiment, the single dose pack is added to a detergent charging system for an automatic dish washing machine. The detergent charging system opens and releases the single dose pack to the wash water and a main compartment of the dish washing machine at a designated point in the wash cycle. Still other embodiments of uses for single dose packs are possible.

In summary the disclosure provides inter alia
1. A water-soluble film comprising polyvinyl alcohol (PVOH) and:
   a) about 9000 ppm to about 150,000 ppm propylene glycol,
   b) about 0 ppm to about 230,000 ppm glycerin, and
   c) about 3,000 ppm to about 170,000 ppm polyethylene glycol.
2. The water-soluble film of point 1, wherein the water-soluble film comprises:
   a) about 9000 ppm to about 90,000 ppm propylene glycol,
   b) about 0 ppm to about 190,000 ppm glycerin, and
   c) about 4,000 ppm to about 170,000 ppm polyethylene glycol.
3. The water-soluble film of points 1 or 2, wherein glycerin is present in the water-soluble film in an amount from 5,000 ppm to about 230,000 ppm.
4. The water-soluble film of any of the preceding points, wherein the polyethylene glycol of the water-soluble film has a number-average molecular weight of about 100 Daltons to about 600 Daltons.
5. A single dose pack comprising:
   a container, wherein the container comprises the water-soluble film of any of the preceding points; and
   a wash composition encapsulated within the container, wherein the wash composition comprises:
      a detergent surfactant;
      water present in an amount of from about 8 to about 40 weight percent, based on the total weight of the wash composition; and
      a non-aqueous solvent mixture comprising propylene glycol, glycerin, and polyethylene glycol in an amount of from about 15 to about 50 weight percent, based on the total weight of the wash composition.
6. The single dose pack of point 5, wherein the water is present in the wash composition in an amount of from about 10 to about 30 weight percent, based on the total weight of the wash composition.
7. The single dose pack of point 5 or 6, wherein the non-aqueous solvent mixture is present in the wash composition in an amount of from about 20 to about 50 weight percent, based on the total weight of the wash composition.
8. The single dose pack of point 5 or 6, wherein the non-aqueous solvent mixture is present in the wash composition in an amount of from about 25 to about 50 weight percent, based on the total weight of the wash composition.
9. The single dose pack of any of points 5 to 8, wherein the polyethylene glycol of the water-soluble film has a number-average molecular weight of about 100 Daltons to about 600 Daltons.
10. The single dose pack of any of points 5 to 9, wherein the water-soluble film comprises:
   a) about 9000 ppm to about 90,000 ppm propylene glycol,
   b) about 0 ppm to about 190,000 ppm glycerin, and
   c) about 4,000 ppm to about 170,000 ppm polyethylene glycol.
11. The single dose pack of any of points 5 to 10, wherein glycerin is present in the water-soluble film in an amount from 5,000 ppm to about 230,000 ppm.
12. The single dose pack of any of points 5 to 11, wherein the polyethylene glycol of the water-soluble film has a number-average molecular weight of about 100 Daltons to about 600 Daltons.
13. The single dose pack of any of points 5 to 12, wherein the non-aqueous solvent mixture comprises propylene glycol in a weight percentage of about 10 percent to about 60 percent, based on total weight of the non-aqueous solvent mixture.
14. The single dose pack of any of points 5 to 13, wherein the non-aqueous solvent mixture comprises glycerin in a weight percentage of about 10 percent to about 60 percent, based on total weight of the non-aqueous solvent mixture.
15. The single dose pack of any of points 5 to 14, wherein the non-aqueous solvent mixture comprises polyethylene glycol in a weight percentage of about 10 percent to about 60 percent, based on total weight of the non-aqueous solvent mixture.
16. A method of producing a single dose pack comprising:
   forming a wash composition comprising:
      a) a detergent surfactant;
      b) water present in an amount of from about 8 to about 40 weight percent, based on the total weight of the wash composition; and
      c) a non-aqueous solvent mixture comprising propylene glycol, glycerin, and polyethylene glycol in an amount of from about 15 to about 50 weight percent, based on the total weight of the wash composition; and
   encapsulating the wash composition within a container to form the single dose pack, wherein the container comprises a water-soluble film, wherein the water-soluble film comprises polyvinyl alcohol (PVOH) and:
      d) about 9000 ppm to about 150,000 ppm propylene glycol,
      e) about 0 ppm to about 230,000 ppm glycerin, and
      f) about 3,000 ppm to about 170,000 ppm polyethylene glycol.
17. The method of point 16, wherein glycerin is present in the water-soluble film in an amount from 5,000 ppm to about 230,000 ppm.
18. The method of point 16 or 17, wherein the water-soluble film comprises:
   a) about 9000 ppm to about 90,000 ppm propylene glycol,
   b) about 0 ppm to about 190,000 ppm glycerin, and
   c) about 4,000 ppm to about 170,000 ppm polyethylene glycol.
19. A method for producing a water-soluble film comprising:
   providing a film comprising polyvinyl alcohol (PVOH); and
   exposing the film to a mixture of non-aqueous solvents comprising propylene glycol, glycerin, and polyethylene glycol for a period of time to allow the film to equilibrate with the non-aqueous solvent mixture.
20. The method of point 19, wherein, after the step of exposing the film to the mixture of non-aqueous solvents, the water-soluble film comprises polyvinyl alcohol (PVOH) and:
   a) about 9000 ppm to about 150,000 ppm propylene glycol,
   b) about 0 ppm to about 230,000 ppm glycerin, and
   c) about 3,000 ppm to about 170,000 ppm polyethylene glycol.

### ILLUSTRATIVE EXAMPLES

The present disclosure is now illustrated by the following non-limiting examples. It should be noted that various changes and modifications can be applied to the following examples and processes without departing from the scope of this disclosure, which is defined in the appended claims. Therefore, it should be noted that the following examples should be interpreted as illustrative only and not limiting in any sense.

Twenty-one different exemplary wash compositions were prepared according to the foregoing description, wherein the ratios of added water, propylene glycol, glycerin, and polyethylene glycol (400 number-average molecular weight) for each exemplary composition are set forth above in TABLE 1, and wherein the sum of added water, propylene glycol, glycerin, and polyethylene glycol for each exemplary composition is 41.041 weight percent of the total wash composition. The wash composition for all the examples also included: a C12-C15 alcohol ethoxylate as a nonionic detergent surfactant present in an amount of 23.074 weight percent; additional (minimum) water present in an amount of 4 weight percent; an optical brightener present in an amount of 0.2 weight percent; a bittering agent present in an amount of 0.05 weight percent; an ionic detergent surfactant present in an amount of 22.36 weight percent, where the ionic detergent surfactant is about 60% active; 50 percent sodium hydroxide in water as a neutralizer, where the sodium hydroxide solution was present in an amount of 0.275 weight percent; triethanol amine as a neutralizer present in an amount of 1.4 weight percent, where water is present in the triethanol amine in an amount of about 15 weight percent based on the total weight of the triethanol amine; coconut fatty acids as a foam inhibitor present in an amount of 4 weight percent; a polymer (e.g., Sokalan® HP 20, available from BASF SE of Ludwigshafen, DE) that increases the efficacy of anionic surfactants present in an amount of 2 weight percent; an enzyme solution present in an amount of 1.6 weight percent (the enzyme solution is approximately 8% active enzyme), where the weight percentages are based on the total weight of the wash composition.

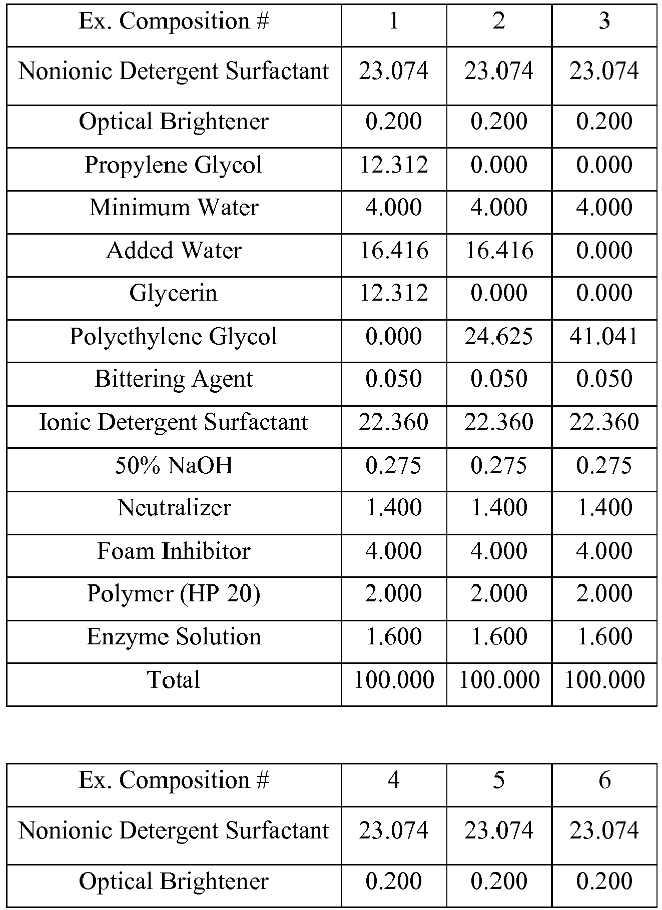

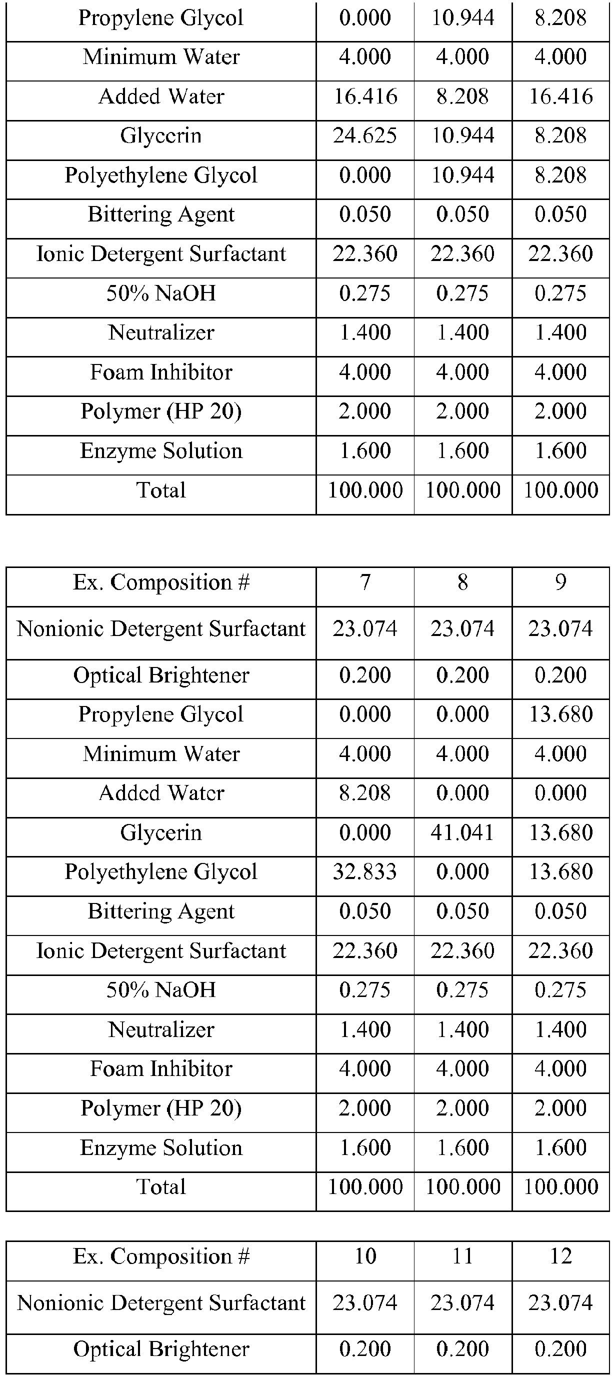

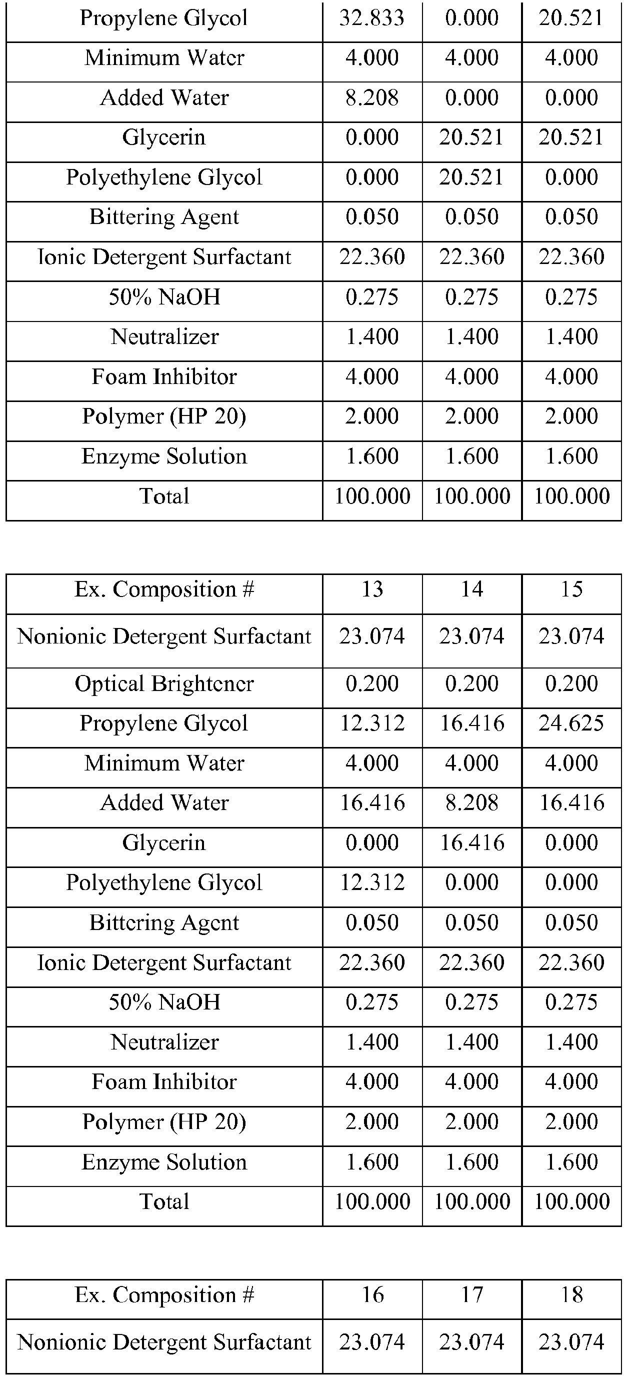

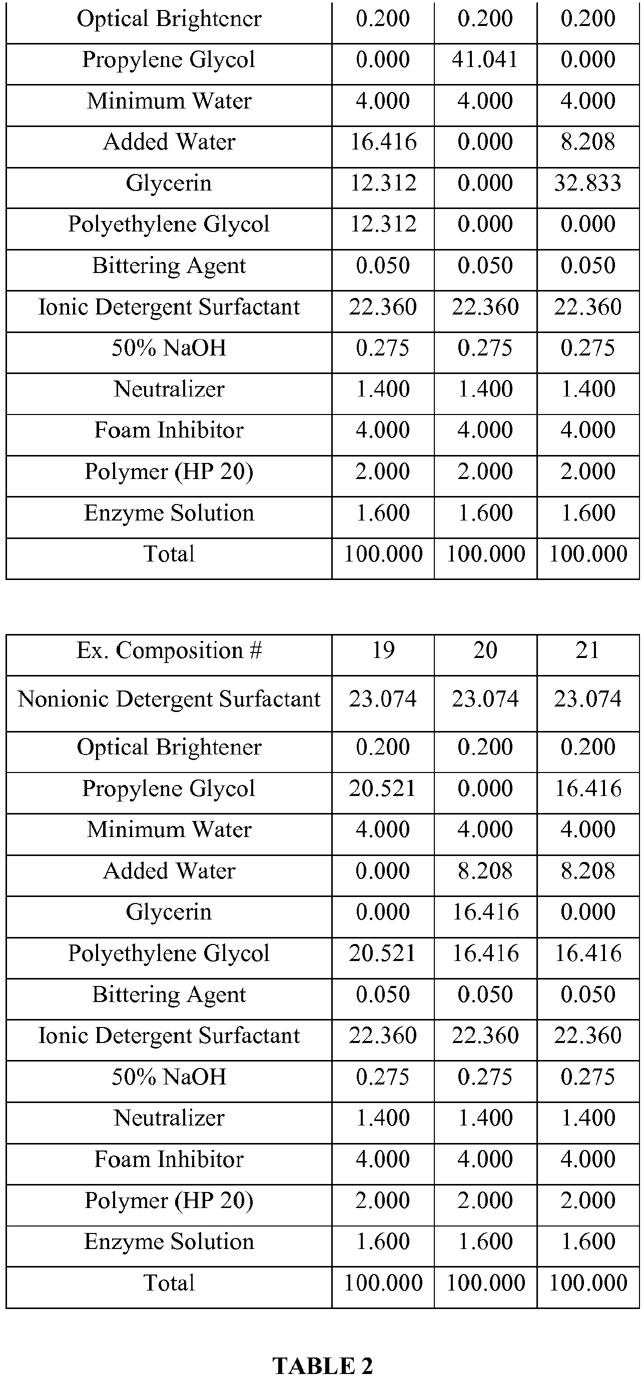

The foregoing wash compositions have been found, when stored for a period of time of at least one week at room temperature, to equilibrate with the film of the single dose pack, to produce a film composition including the non-aqueous solvent amounts as described above. Accordingly, any of the foregoing wash compositions may be employed to create a single dose pack in accordance with embodiments of the present disclosure. Longer periods of equilibration times and increased storage temperatures are also contemplated with the scope of the present disclosure, depending on required storage times and conditions.

The twenty-one different wash compositions were prepared into single dose packs as described in the foregoing detailed description and in accordance with the compositional percentages set forth above in TABLE 2. The film used form the examples included PVOH, glycerin, and propylene glycol, but was assumed to include no polyethylene glycol. In a first testing protocol, which was designed to approximate the non-aqueous solvent content in the pack films as purchased by a consumer (i.e., after manufacture, shipping, distribution, etc.), the twenty-one single dose packs were allowed to equilibrate at 23.9° C for two weeks, in sealed PET (polyethylene terephthalate) bags, with two packs in each bag. In a second testing protocol, which was designed to approximate the pack height and complete dissolution time of the packs as purchased by a consumer, the twenty-one single dose packs were allowed to equilibrate at 40.5° C for four weeks, in sealed PET bags, with two packs in each bag. For the first protocol, after equilibration, the films were analyzed for non-aqueous solvent content. The twenty-one different films of the first protocol as analyzed, with their non-aqueous solvent content (in ppm), are as set forth below in TABLE 3. In TABLE 3, a notation of 0 ppm means below the detection limit of the analysis method, not necessarily exactly 0 ppm. The twenty-one different films of the second protocol were analyzed for the complete dissolution time (in seconds (s)) of the packs, which was determined in 10° C water using a tergotometer. Further, TABLE 4 includes the measured height of the packs (in comparison to their original pack height of 2.1 cm (0.83 inches) for each of the twenty-one examples).

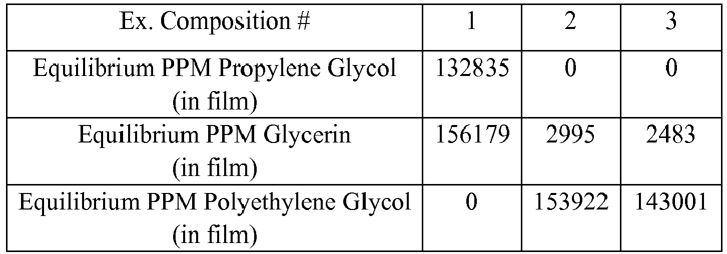

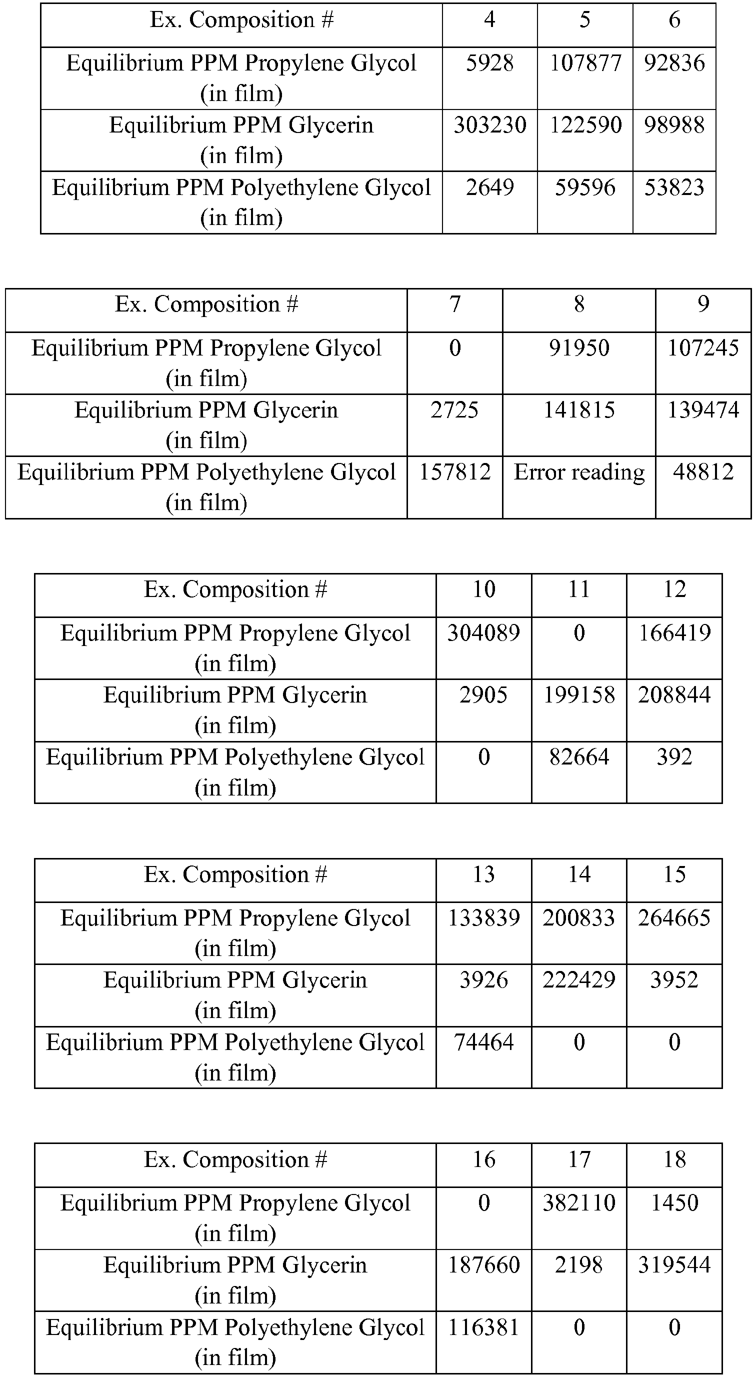

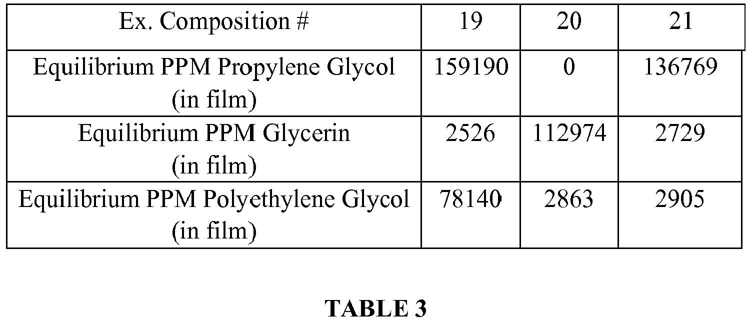

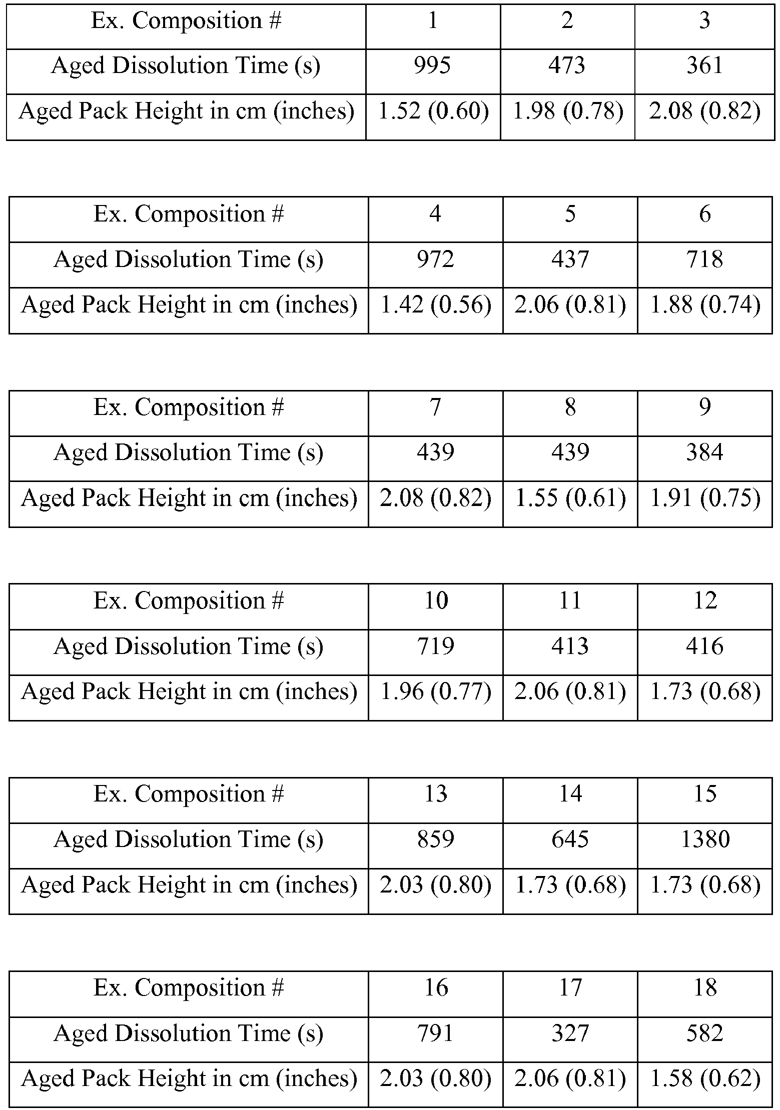

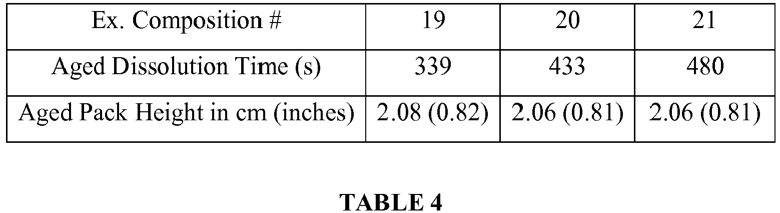

The same type of film was used to contain the twenty-one wash compositions for both of the testing protocols. As is readily apparent from TABLE 3, however, after a period of storage, the content of propylene glycol, glycerin, and polyethylene glycol in the films of each example was different. (Note that a very low level of PEG was detected in some of these films that did not have any PEG in the wash composition (Ex. Compositions 4 and 12); this is a minor misdetection due to the particularities of film analysis methods, and not due to any PEG in the original film. The noise level may be up to about 2700 ppm, which is about 0.5% of the maximum detectable level. Because the same type of film was used for each example, the film compositions would have been the same prior to the storage period, it is concluded that the film equilibrates with the wash composition, at least with regard to propylene glycol, glycerin, and polyethylene glycol. Based on this, one may adjust the content of these non-aqueous solvents in the wash composition in order to arrive at a particular film content of these solvents after typical storage periods (between manufacture and eventual sale to the consumer), wherein the particular film content is chosen for the most beneficial pack haptics.

Without wishing to be bound by theory, PEG in particular may be beneficially introduced into the film during the storage period in this manner. For example, a water-soluble film, as manufactured, may not initially contain PEG. One such film is disclosed in WO2014/110356, which in addition to PVOH, can include varying amounts of a compatibilizing agent (for example, carboxymethyl cellulose), sugar alcohol plasticizers (for example, xylitol and/or sorbitol), glycerin, propylene glycol, and process-aid surfactants. However, as can be seen from TABLE 3, the film after the storage period indeed includes significant amounts of PEG where PEG was in the wash composition. Moreover, it further becomes clear that the resultant amount of PEG in each film after the storage period varies with the amount of PEG it the encapsulated wash composition, thus leading to a hypothesis that an equilibration of non-aqueous solvents between the film and the wash composition occurs during the storage period.

Desirably, with the introduced PEG after storage, as demonstrated in TABLE 4, the dissolution time ranges between about 300 and about 900 seconds, and the measured pack height ranges between about 1.42 cm (0.56 inches) and about 2.11 cm (0.83 inches). The dissolution time, after the aging, desirably ranges between about 300 and about 800 seconds, more desirably ranges between about 300 and about 720 seconds. The measured pack height, after the aging, desirably ranges between about 1.83 cm (0.72 inches) and about 2.11 cm (0.83 inches), more desirably ranges between about 1.91 cm (0.75 inches) and about 2.11 cm (0.83 inches). As can be seen, the best dissolution times and pack height values are available when the polyethylene glycol content in the equilibrated film is relatively higher. Thus, inclusion of PEG in the film, via equilibration as described above, is favorable for pack haptics.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment, it being understood that various changes may be made in the function and arrangement of elements described in an exemplary embodiment without departing from the scope as set forth in the appended claims and their legal equivalents.

## Claims

1. A water-soluble film comprising polyvinyl alcohol (PVOH) and:
a) about 9000 ppm to about 150,000 ppm propylene glycol,
b) about 0 ppm to about 230,000 ppm glycerin, and
c) about 3,000 ppm to about 170,000 ppm polyethylene glycol.

2. The water-soluble film of claim 1, wherein glycerin is present in the water-soluble film in an amount from 5,000 ppm to about 230,000 ppm.

3. The water-soluble film of claim 1, wherein the polyethylene glycol of the water-soluble film has a number-average molecular weight of about 100 Daltons to about 600 Daltons.

4. A single dose pack comprising:
a container, wherein the container comprises the water-soluble film of claim 1; and
a wash composition encapsulated within the container, wherein the wash composition comprises:
a detergent surfactant;
water present in an amount of from about 8 to about 40 weight percent, based on the total weight of the wash composition; and
a non-aqueous solvent mixture comprising propylene glycol, glycerin, and polyethylene glycol in an amount of from about 15 to about 50 weight percent, based on the total weight of the wash composition.

5. The single dose pack of claim 4, wherein the water is present in the wash composition in an amount of from about 10 to about 30 weight percent, based on the total weight of the wash composition.

6. The single dose pack of claim 4, wherein the non-aqueous solvent mixture is present in the wash composition in an amount of from about 20 to about 50 weight percent, based on the total weight of the wash composition.

7. The single dose pack of claim 4, wherein the polyethylene glycol of the water-soluble film has a number-average molecular weight of about 100 Daltons to about 600 Daltons.

8. The single dose pack of claim 4, wherein the water-soluble film comprises:
a) about 9000 ppm to about 90,000 ppm propylene glycol,
b) about 0 ppm to about 190,000 ppm glycerin, and
c) about 4,000 ppm to about 170,000 ppm polyethylene glycol.

9. The single dose pack of claim 8, wherein the polyethylene glycol of the water-soluble film has a number-average molecular weight of about 100 Daltons to about 600 Daltons.

10. The single dose pack of claim 4, wherein the non-aqueous solvent mixture comprises propylene glycol in a weight percentage of about 10 percent to about 60 percent, based on total weight of the non-aqueous solvent mixture.

11. The single dose pack of claim 4, wherein the non-aqueous solvent mixture comprises glycerin in a weight percentage of about 10 percent to about 60 percent, based on total weight of the non-aqueous solvent mixture.

12. The single dose pack of claim 4, wherein the non-aqueous solvent mixture comprises polyethylene glycol in a weight percentage of about 10 percent to about 60 percent, based on total weight of the non-aqueous solvent mixture.

13. A method of producing a single dose pack comprising:
forming a wash composition comprising:
a) a detergent surfactant;
b) water present in an amount of from about 8 to about 40 weight percent, based on the total weight of the wash composition; and
c) a non-aqueous solvent mixture comprising propylene glycol, glycerin, and polyethylene glycol in an amount of from about 15 to about 50 weight percent, based on the total weight of the wash composition; and
encapsulating the wash composition within a container to form the single dose pack, wherein the container comprises a water-soluble film, wherein the water-soluble film comprises polyvinyl alcohol (PVOH) and:
d) about 9000 ppm to about 150,000 ppm propylene glycol,
e) about 0 ppm to about 230,000 ppm glycerin, and
f) about 3,000 ppm to about 170,000 ppm polyethylene glycol.

14. The method of claim 13, wherein glycerin is present in the water-soluble film in an amount from 5,000 ppm to about 230,000 ppm.

15. A method for producing a water-soluble film comprising:
providing a film comprising polyvinyl alcohol (PVOH); and
exposing the film to a mixture of non-aqueous solvents comprising propylene glycol, glycerin, and polyethylene glycol for a period of time to allow the film to equilibrate with the non-aqueous solvent mixture.
